# FASCICULE DE BREVET EUROPEEN

(11) **EP 3 827 191 B1**
(45) Date de publication et mention de la délivrance du brevet: **14.02.2024**
(21) Numéro de dépôt: 19758425.3
(22) Date de dépôt: 03.07.2019
(51) Int. Cl.: F16L 37/088

(54) **DISPOSITIF DE RACCORD TUBULAIRE**
ROHRFÖRMIGE VERBINDUNGSVORRICHTUNG
TUBULAR CONNECTION DEVICE

(30) Priorité: 24.07.2018 FR 1856856
(43) Date de publication de la demande: 02.06.2021
(73) Titulaire: A. Raymond et Cie, 38000 Grenoble (FR)
(72) Inventeur: ULRICH, Jérôme, 38140 SAINT BLAISE DU BUIS (FR)
(74) Mandataire: IP Trust
(86) Numéro de dépôt international: PCT/FR2019/051647
(87) Numéro de publication internationale: WO 2020/021179

(56) Documents cités:
- EP-A1- 2 402 640
- EP-A2- 1 705 417
- WO-A2-2011/140281

## Description

### DOMAINE DE L'INVENTION

La présente invention concerne un dispositif de raccord tubulaire pour connecter des tuyaux ou conduits. Elle trouve notamment son application dans le domaine automobile et plus particulièrement dans les connexions fluidiques de système de refroidissement.

### ARRIERE PLAN TECHNOLOGIQUE DE L'INVENTION

Il existe dans l'état de la technique des dispositifs de raccord tubulaire permettant de connecter entre eux un connecteur femelle et un embout mâle, la connexion entre ces deux éléments étant verrouillée par une agrafe métallique.

Par exemple, dans le document US7387318, le connecteur femelle comporte des fentes latérales diamétralement opposées et symétriques par rapport à un axe radial. Une agrafe en forme de U, formée d'une tête reliée à deux branches, enserre le connecteur femelle ; l'agrafe peut occuper deux positions :
- une position enfoncée dans laquelle la tête de l'agrafe est en contact avec le connecteur femelle ; les branches de l'agrafe traversent le connecteur femelle et débouchent dans son volume intérieur, sensiblement parallèlement à l'axe radial. Lorsque l'embout mâle, présentant un collet tronconique muni d'une rainure annulaire, est inséré dans le connecteur femelle, les branches de l'agrafe sont écartées par le collet, puis bloquées dans la rainure annulaire, lorsque l'embout mâle est totalement inséré dans le connecteur femelle. Dans cette position enfoncée de l'agrafe, la connexion entre le connecteur femelle et l'embout mâle est verrouillée.
- une position relevée dans laquelle la tête de l'agrafe est éloigné du connecteur ; les branches sont maintenues sensiblement tangentes au connecteur et ne débouchent pas dans son volume intérieur. L'embout mâle peut ainsi être séparé du connecteur femelle.

Ce dispositif présente l'inconvénient de ne pas disposer d'un moyen visuel permettant de savoir si la connexion a correctement été établie.

Pour adresser ce problème, on connaît du document EP2402640 un dispositif de raccord tubulaire doté d'un témoin de verrouillage. Dans ce dispositif, lorsque l'embout mâle est inséré dans le connecteur femelle, l'agrafe ne peut être mise en position enfoncée de verrouillage que si l'embout mâle est correctement positionné. Ainsi la position de l'agrafe lors de l'insertion de l'embout mâle témoigne de l'état de la connexion. Il est toutefois possible de positionner l'agrafe en position enfoncée de verrouillage en l'absence de l'embout mâle.

Le document EP1705417 divulgue également un dispositif de raccord tubulaire.

### OBJET DE L'INVENTION

Un but de l'invention est de proposer une solution alternative à l'état de la technique. Elle vise notamment à éviter la configuration où l'agrafe est en position enfoncée de verrouillage alors que l'embout mâle n'a pas été inséré.

### BREVE DESCRIPTION DE L'INVENTION

Le but de la présente invention est atteint par le dispositif de raccord tubulaire tel que libellé à la revendication 1.

Notamment, l'invention propose un dispositif de raccord tubulaire comprenant :
- un connecteur femelle, dans lequel un embout mâle muni d'une rainure annulaire est destiné à être inséré, le connecteur femelle étant pourvu de deux fentes latérales symétriques par rapport à un axe radial ;
- une agrafe de verrouillage en forme de U comportant une tête et deux branches, et chevauchant le connecteur femelle, chaque branche s'étendant dans une fente latérale et se terminant par un pied ;
- deux systèmes de guidage latéraux symétriques par rapport à l'axe radial, coopérant avec les pieds de l'agrafe pour maintenir celle-ci dans une position relevée de déconnexion de l'embout mâle ou dans une position enfoncée de verrouillage de l'embout mâle dans le connecteur femelle.

Selon l'invention, le dispositif comprend une bague disposée contre une paroi interne du connecteur femelle. De plus, chaque système de guidage comprend :
- une encoche, formée dans le connecteur femelle, attenante à la fente latérale ;
- un plateau délimitant un bord inférieur de l'encoche et sur lequel le pied repose pour maintenir l'agrafe dans une position intermédiaire, entre la position relevée et la position enfoncée, en l'absence d'embout mâle ;
- un ergot disposé sur une languette flexible portée par la bague, et destiné à combler au moins en partie l'encoche et le plateau lorsque l'embout mâle est inséré dans le connecteur, sa rainure annulaire étant en vis-à-vis des fentes, pour permettre à l'agrafe de passer dans une position enfoncée ou dans une position relevée.

Selon d'autres caractéristiques avantageuses et non limitatives de l'invention, prises seules ou selon toute combinaison techniquement réalisable :
- chaque système de guidage comprend une première rampe pour guider le pied entre les positions relevée et intermédiaire de l'agrafe, et une deuxième rampe pour guider le pied entre les positions intermédiaire et enfoncée, la première rampe et la deuxième rampe étant formées sur le connecteur femelle ;
- la première rampe et la deuxième rampe sont inclinées sensiblement tangentiellement à la paroi interne du connecteur femelle et séparée entre elles par l'encoche ;
- la première rampe est délimitée en partie basse par l'encoche et en partie haute par un rebord formant une butée pour le pied de l'agrafe ;
- la première rampe comprend un creux à proximité du rebord formant une zone de retenue pour le pied, de manière à retenir l'agrafe en position relevée ;
- la deuxième rampe est délimitée en partie haute par le plateau et en partie basse par un palier sur lequel le pied de l'agrafe se positionne lorsque l'agrafe est en position enfoncée ;
- l'ergot comble en partie le plateau lorsque l'embout mâle est inséré, sa rainure annulaire étant en vis-à-vis des fentes latérales, le pied de l'agrafe reposant sur un bord non comblé du plateau, plaçant l'agrafe dans une position transitoire, entre la position intermédiaire et la position enfoncée ;
- la deuxième rampe comporte un premier épaulement sur lequel le pied de l'agrafe est susceptible de reposer pour placer l'agrafe dans une position transitoire, entre la position intermédiaire et la position enfoncée ;
- chaque système de guidage comprend un élément de blocage formé sur le connecteur femelle et configuré pour bloquer l'écartement de la branche de l'agrafe, lorsque l'agrafe est en position enfoncée ;
- l'élément de blocage comporte un deuxième épaulement en vis-à-vis du premier épaulement, les deux épaulements étant séparés par un espace sensiblement inférieur à une largeur du pied ;
- la surface extérieure de l'élément de blocage forme une troisième rampe inclinée vers le bas et vers l'extérieur du connecteur femelle ;
- l'ergot de la languette flexible forme une rampe inclinée sensiblement tangentiellement à la paroi interne du connecteur femelle ;
- la languette flexible est formée par une portion de la bague attenante à une ouverture latérale formée dans la bague en vis-à-vis d'une fente latérale;
- la tête de l'agrafe présente au moins une butée coopérant avec des trous aménagées dans le connecteur femelle, pour prévenir le positionnement de l'agrafe en position enfoncée lors de l'insertion de l'embout mâle tant que sa rainure annulaire n'est pas en vis-à-vis des fentes latérales ;
- l'encoche est formée par un élargissement de la fente latérale.

### BREVE DESCRIPTION DES DESSINS

D'autres caractéristiques et avantages de l'invention ressortiront de la description détaillée de l'invention qui va suivre, en référence aux figures annexées sur lesquelles :
- les figures 1a et 1b représentent respectivement un dispositif de raccord tubulaire conforme à l'invention en vue éclatée et en vue assemblée;
- la figure 1c représente un zoom de la figure 1b au niveau d'un système de guidage conforme à l'invention, l'agrafe étant en position intermédiaire ;
- la figure 2 représente un système de guidage conforme à l'invention en coupe dans un plan transversal, l'agrafe étant en position enfoncée de verrouillage ;
- les figures 3a à 3c représentent des modes de réalisation alternatifs des systèmes de guidage ;
- la figure 4 représente un dispositif de raccord tubulaire conforme à un mode de réalisation de l'invention en coupe dans un plan transversal passant par la fente latérale ;
- la figure 5 représente un dispositif de raccord tubulaire conforme à un autre mode de réalisation de l'invention en perspective et selon une coupe dans un plan transversal passant par la fente ;
- la figure 6 représente un dispositif de raccord tubulaire conforme à l'invention en position intermédiaire en coupe dans un plan longitudinal;
- la figure 7 représente un dispositif de raccord tubulaire conforme à l'invention, l'agrafe étant en position enfoncée en présence de l'embout mâle, en position de verrouillage ;
- la figure 8 représente un dispositif de raccord tubulaire conforme à l'invention, l'agrafe étant en position relevée.

### DESCRIPTION DETAILLEE DE L'INVENTION

Par souci de simplification de la description à venir, les mêmes références sont utilisées pour des éléments identiques ou assurant la même fonction. Les figures sont des représentations schématiques qui, dans un objectif de lisibilité, ne sont pas nécessairement à l'échelle.

### Présentation générale du dispositif de raccord tubulaire

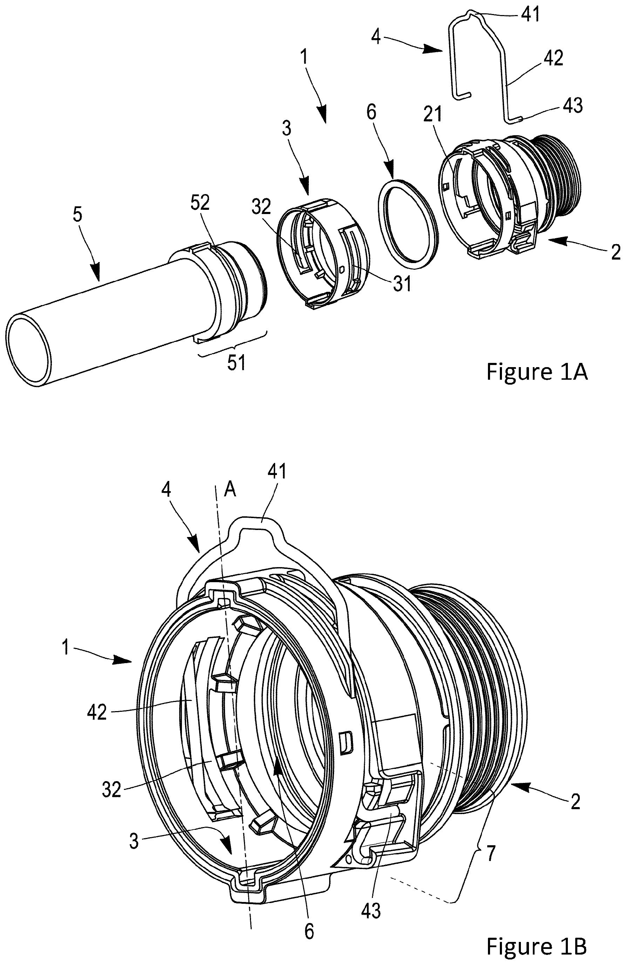

La figure 1a représente une vue éclatée d'un dispositif de raccord tubulaire 1 conforme à la présente invention. Le dispositif est également représenté, sur la figure 1b, en vue d'ensemble.

Le dispositif de raccord tubulaire 1 est composé d'un connecteur femelle tubulaire 2, d'une bague 3 et d'une agrafe de verrouillage 4. Il vise à maintenir raccordé un embout mâle tubulaire 5 au connecteur femelle 2. Plus particulièrement, l'embout mâle 5 est de forme tubulaire et présente un collet tronconique 51 dotée d'une rainure annulaire 52. L'embout mâle 5 est inséré selon un axe principal dans le connecteur femelle 2 et maintenu verrouillé au connecteur femelle 2 par l'agrafe 3 lorsque celle-ci est disposée dans la rainure annulaire 52. L'embout mâle 5 peut également être muni d'au moins une nervure de guidage destinée à interagir avec au moins une rainure de dimension adaptée disposée sur la surface interne du connecteur femelle 2 pour empêcher la rotation de l'embout mâle 5 lors de son insertion dans le connecteur femelle 2. Le connecteur femelle 2, l'embout mâle 5 et la bague 3 peuvent être composés d'un matériau plastique ou métallique.

La bague 3 est logée dans le connecteur femelle 2, contre la paroi interne de ce connecteur 2. Des crans peuvent être disposés sur la surface externe de la bague 3 de façon à se cliper dans des ouvertures présentes sur la surface interne du connecteur femelle 2 pour maintenir la bague 3 solidaire du connecteur femelle 2. La bague 3 peut aussi être rendue solidaire du connecteur femelle 2 par soudure ou tout autre technique connue. Afin d'améliorer l'étanchéité du dispositif de raccord 1, il est avantageux d'insérer un joint d'étanchéité 6 dans le connecteur femelle 2 avant d'assembler la bague 3 au connecteur femelle 2. Le joint d'étanchéité 6 est ainsi maintenu en place entre la bague 3 et le connecteur femelle.

L'agrafe 4 possède une forme en U. Elle est formée d'une tête 41 reliée à deux branches 42 se terminant chacune par un pied 43. Les deux pieds 43 de l'agrafe 4 forment un élargissement de l'extrémité des branches 42 de l'agrafe 4 selon l'axe principal du dispositif de raccord 1. De manière avantageuse, les branches 42 et les pieds 43 de l'agrafe 4 sont disposés en L, c'est à dire que les pieds 43 sont orientés selon l'axe principal, lorsque l'agrafe 4 est insérée transversalement dans le connecteur 2. Ils peuvent être formés par pliage de l'extrémité des branches 42 de l'agrafe 4. Il est tout à fait envisageable d'adapter le dispositif de raccord 1 à une autre forme de pieds que celle représentée sur la figure 1a. Quel que soit la forme choisie, un pied 43 forme un élargissement de l'extrémité des branches dans la direction principale. L'agrafe 4 est avantageusement composée d'un matériau métallique.

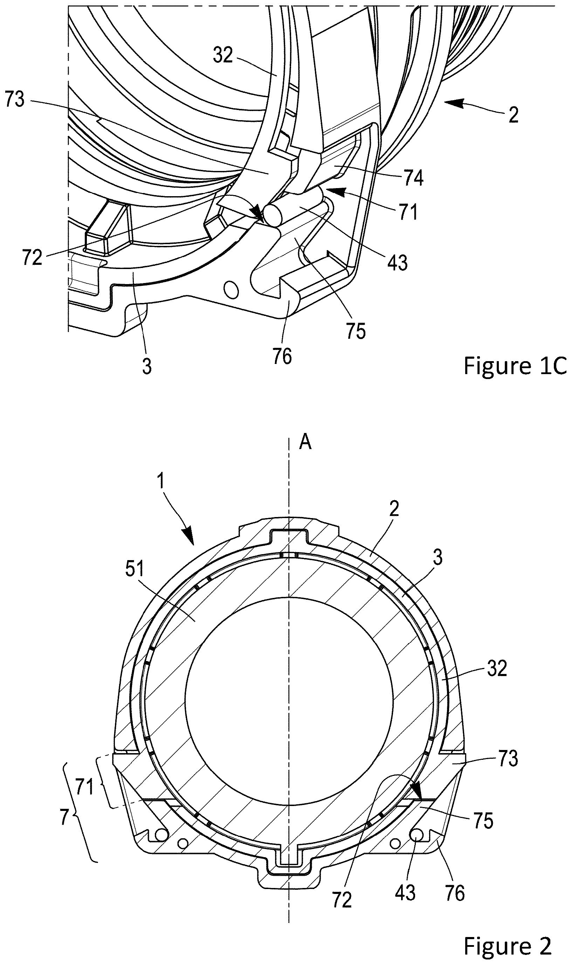

Le connecteur femelle 2 est pourvu de deux fentes latérales 21 symétriques par rapport à un axe radial A représenté sur les figures 1b et 2. La bague 3 est également munie de deux ouvertures latérales 31 également symétriques par rapport à l'axe radial A. Les fentes latérales 21 du connecteur femelle 2 ainsi que les ouvertures latérales 31 de la bague 3 sont disposées en vis-à-vis les unes des autres, lorsque la bague 3 est insérée dans le connecteur femelle 2. La largeur des fentes 21 et des ouvertures latérales 31 est choisie pour sensiblement correspondre à la dimension des branches 42 de l'agrafe 4.

L'agrafe 4 est assemblée de façon à chevaucher le connecteur femelle 2, les branches 42 de l'agrafe 4 pénétrant à travers les fentes 21 et les ouvertures 31 latérales. Les pieds 43 de l'agrafe 4, ne pouvant pas, du fait de leurs dimensions, traverser les fentes 21 et ouvertures 31 latérales, sont en appui sur la surface extérieure du connecteur femelle 2.

Dans la suite de la description, on considérera que la tête 41 de l'agrafe 4 définit le haut de l'agrafe 4. Ainsi lorsque l'on parlera, par exemple, de « haut », « partie haute » ou « partie supérieure » d'une partie du dispositif, on désignera toute région ou élément situé dans la moitié de cette partie la plus proche de la tête 41 de l'agrafe 4, les deux moitiés de la partie étant délimitées par un plan transversal perpendiculaire à l'axe radial A. Par conséquent on désignera par « bas », « partie basse » ou « partie inférieure » toute région ou élément se situant dans la moitié la plus éloignée de la tête 41 de l'agrafe 4.

De manière avantageuse, la surface extérieure haute du connecteur femelle 2 peut être munie d'éléments de maintien de la tête 41 de sorte à limiter tout déplacement longitudinal de l'agrafe 4. Il peut par exemple s'agir d'une rainure pour accueillir la tête 41 de l'agrafe 4 ou encore de nervures encadrant de part et d'autres la tête 41 de l'agrafe 4.

L'agrafe 4 a pour rôle de verrouiller la connexion en venant loger ses branches 42, à travers les fentes latérales 21 et ouvertures 31, dans la rainure 52 de l'embout mâle 5. L'agrafe 4 sert aussi de témoin visuel de l'état de connexion. A ce titre, l'agrafe 4 peut occuper une position relevée de déconnexion, une position enfoncée de verrouillage ainsi qu'une position intermédiaire de livraison. Dans la position intermédiaire, l'agrafe 4 se situe en élévation entre la position relevée de déconnexion et la position enfoncée de verrouillage.

Afin de pouvoir correctement guider l'agrafe 4 et la maintenir dans les positions adéquates pour refléter l'état de la connexion, le dispositif de raccord tubulaire 1 est muni de systèmes de guidage 7 qui coopèrent avec les pieds 43 de l'agrafe 4.

### Description des systèmes de guidage

Le dispositif de raccord 1 comprend deux systèmes de guidage 7 symétriquement disposés par rapport à l'axe radial A, et situés au niveau de la partie inférieure du dispositif de raccord 1. Dans la suite de la description, lorsque l'on décrira un système de guidage, il faudra comprendre que la même description s'applique à chacun des systèmes de guidage 7, symétriques l'un de l'autre.

La figure 1c représente un zoom du système de guidage 7 de la figure 1b, débutant sur un plan de coupe transversal situé après les branches 42 de l'agrafe 4, ce qui explique qu'on ne visualise que le pied 43 de ladite agrafe 4. La figure 2 représente un système de guidage en coupe dans un plan transversal. On notera que la figure 1c représente le système de guidage 7 lorsque l'agrafe 4 est en position intermédiaire et la figure 2 lorsque l'agrafe 4 est position enfoncée de verrouillage, ces positions seront expliquées dans la suite de la description. Le système de guidage 7 comprend une encoche 71, un plateau 72, une première rampe 74 et une deuxième rampe 75 formés sur le connecteur femelle 2. Le système de guidage 7 comprend également un ergot 73 porté par la bague 3.

L'encoche 71 est formée dans le connecteur femelle 2 attenante à la fente latérale 21. En particulier, elle peut être formée par un élargissement de la fente latérale 21. Le bord inférieur de l'encoche délimite le plateau 72. L'encoche 71 expose une partie de la surface de la bague 3. L'encoche 71 a pour but de permettre la traversée, au moins partielle, du pied 43 à travers le connecteur femelle 2 pour que celui-ci puisse prendre appui sur le plateau 72. De manière préférentielle, l'ouverture latérale 31 de la bague 3 ne comprend pas d'encoche similaire, afin de maintenir le pied 43 sur le plateau 72.

Le plateau 72 est destiné à recevoir le pied 43 de l'agrafe 4 pour maintenir l'agrafe 4 dans une position intermédiaire de livraison en l'absence de l'embout mâle 5. Cette position est représentée sur la figure 1c. L'agrafe 4 ne peut normalement pas sortir de cette position en l'absence de l'embout 5. En effet, l'agrafe 4 ne peut pas être déplacée en position abaissée car le pied 43 est en appui sur le plateau 72, et ne peut pas non plus être déplacée en position relevée car le pied 43 viendrait en butée avec la partie supérieure de l'encoche 71.

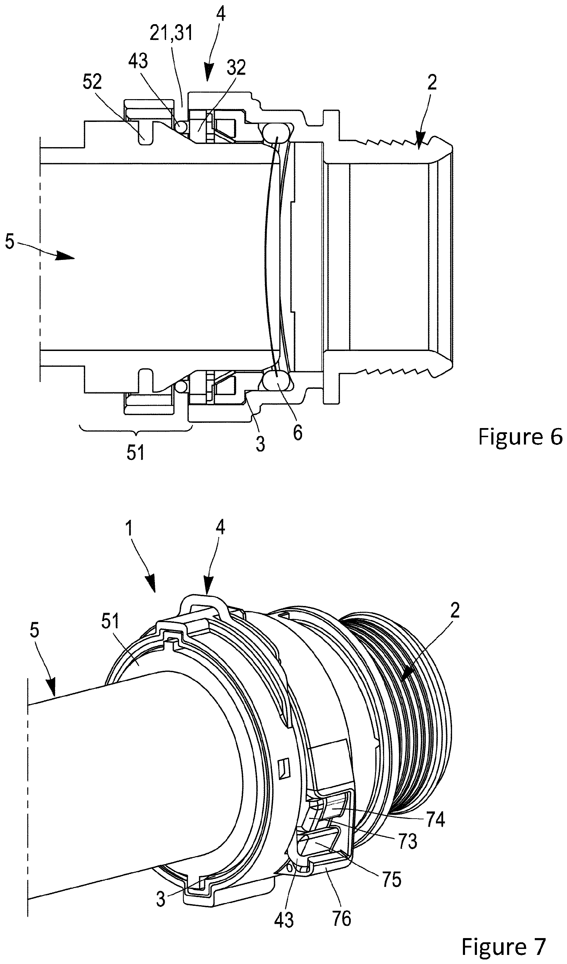

Lors de l'insertion de l'embout mâle 5, tel que cela est illustré sur la figure 6, le collet tronconique 51 vient en appui sur les deux branches 42 de l'agrafe 4 et tend à les écarter l'une de l'autre, ce qui a pour conséquence de sortir au moins partiellement le pied 42 de l'encoche 71 et du plateau 72.

Revenant à la description du système de guidage 7 représenté sur les figures 1c et 2, l'ergot 73 est disposé sur une languette flexible 32 portée par la bague 3. De manière préférentielle, la languette flexible 32 est formée par une portion de la bague 3 attenante à l'ouverture latérale 31.

L'ergot 73 a pour but de combler au moins en partie l'encoche 71 et le plateau 72 de sorte que le pied 43 de l'agrafe 4 ne puisse reposer que partiellement sur le plateau 72 lorsque l'embout mâle est inséré dans le connecteur femelle 2 en position de pré-verrouillage, sa rainure annulaire 52 étant alors en vis-à-vis des fentes 21.

En l'absence de l'ergot 73, lorsque l'embout mâle 5 est en position de pré-verrouillage, les pieds 43 de l'agrafe 4, encore partiellement sur le plateau 72, auraient tendance à se rapprocher l'un de l'autre, pour reprendre leur place initiale sur le plateau 72 et garder l'agrafe 4 en position intermédiaire. En effet, lorsque le connecteur mâle 5 est en position de pré-verrouillage, le collet 51 n'appuie plus sur les branches 42 pour forcer leur écartement car ces dernières sont alors alignées avec la rainure du collet 52. Les branches 42, ne subissant plus de force visant à les écarter, tendraient donc revenir à leur position précédente.

L'ergot 73 venant combler au moins partiellement l'encoche 71 et le plateau 72, l'agrafe 4 ne peut plus conserver sa position intermédiaire car ses pieds 43 ne peuvent occuper qu'au mieux partiellement le plateau 72, l'agrafe 4 occupe alors une position transitoire correspondant à la position de pré-verrouillage de l'embout mâle 5. L'agrafe 4 en position transitoire peut sensiblement occuper la même altitude que lorsqu'elle est en position intermédiaire, c'est-à-dire que la tête 41 de l'agrafe 4 se trouve sensiblement à une même distance du connecteur femelle 2 dans les deux positions. En position transitoire toutefois l'agrafe 4 peut passer en position enfoncée par appui sur la tête 41 de l'agrafe 4 ou en position relevée en tirant sur la tête 41 de l'agrafe 4. Lorsque l'agrafe 4 est en position transitoire, les pieds 43 de l'agrafe 4 ne sont que partiellement en contact avec le plateau 72 (partie inférieure de l'encoche 71) ou avec la partie supérieure de l'encoche 71, et peuvent glisser facilement hors de l'encoche 71. L'ergot 73, lorsqu'il est engagé dans l'encoche 71 par l'embout 5 en position de pré-verrouillage, permet de dégager les pieds 43 de l'encoche 71 afin de permettre à l'agrafe 4 de passer dans une position enfoncée ou dans une position relevée.

On notera qu'en position transitoire, les pieds 43 de l'agrafe 4 pouvant encore reposer en partie sur le plateau 72, les branches 42 de l'agrafe 4 peuvent pénétrer en partie au moins dans la rainure annulaire 52 et retenir l'embout mâle 5 connecté au connecteur femelle 2. La connexion est établie mais pas définitive car les branches 42 peuvent encore être écartées pour les sortir de la rainure 52.

La première rampe 74 et la deuxième rampe 75 interagissent avec le pied 43 de l'agrafe 4. La première rampe 74 a pour rôle de guider l'agrafe 4 entre la position intermédiaire, en passant par la position transitoire, et la position relevée. La deuxième rampe 75, quant à elle, a pour rôle de guider l'agrafe 4 entre la position intermédiaire, en passant par la position transitoire, et la position enfoncée. La première rampe 74 et la deuxième rampe 75 sont formées sur le connecteur femelle 2, attenantes à la fente latérale 21. Elles sont inclinées sensiblement tangentiellement à la paroi interne du connecteur femelle 2 et séparées entre elles par l'encoche 71. Dit autrement, les rampes 74 et 75 sont inclinées vers le bas et vers l'intérieur du dispositif de raccord 1.

Ainsi, si l'on tire sur la tête 41 de l'agrafe 4 lorsqu'elle est en position transitoire pour la placer en position relevée de déconnexion, le pied 43 de l'agrafe 4 sort entièrement du plateau 72 et vient glisser sur la première rampe 74 qui, de part son inclinaison, va forcer les branches 42 de l'agrafe 4 à s'écarter l'une de l'autre. En position relevée, les branches 42 de l'agrafe 4 sont écartées l'une de l'autre de façon à être sensiblement tangentes au connecteur femelle 2 et ne plus déboucher dans son volume interne pour ne plus verrouiller l'embout mâle 5 au connecteur femelle 2, les branches 42 ne pouvant plus interagir avec la rainure 52 de l'embout mâle 5.

De manière similaire, si l'on appuie sur la tête 41 de l'agrafe 4 pour la placer en position enfoncée de verrouillage, le pied 43 de l'agrafe 4 sort entièrement du plateau 72 et vient glisser sur la deuxième rampe 75 qui, de part son inclinaison, va autoriser les branches 42 de l'agrafe 4 à se rapprocher l'une de l'autre. En position enfoncée, les branches 42 de l'agrafe 4 sont rapprochées l'une de l'autre de sorte à verrouiller l'embout mâle 5 au connecteur femelle 2 en pénétrant plus profondément dans la rainure annulaire 52 de l'embout mâle 5.

Pour éviter que l'on puisse sortir complètement l'agrafe 4 du connecteur femelle 2 lorsque l'on place l'agrafe en position relevée, la première rampe 74 peut être délimitée en partie haute par un rebord qui forme ainsi une butée pour le pied 43 de l'agrafe 4 lorsque l'on tire sur la tête 41 de l'agrafe 4. La première rampe 74 est délimitée en partie basse par l'encoche 71.

De manière avantageuse, la première rampe 74 peut également comprendre un creux à proximité du rebord pour former une zone de retenue pour le pied 43 de manière à retenir l'agrafe 4 en position relevée. En l'absence de ce creux, dès lors que l'on arrêtera de tirer sur la tête 41 de l'agrafe 4, l'agrafe 4 aura tendance à redescendre vers la position intermédiaire. En effet, les branches 42 de l'agrafe 4 ont tendance à vouloir se rapprocher l'une de l'autres après avoir été forcées à s'écarter l'une de l'autre, en ayant leur pieds 43 qui glissent vers le bas sur la première rampe 74.

La deuxième rampe 75 est délimitée en partie haute par le plateau 72 et peut, de manière avantageuse, être délimitée en partie basse par un palier sur lequel le pied 43 de l'agrafe 4 se positionne lorsque l'agrafe 4 est en position enfoncée.

De manière avantageuse, pour faciliter le passage de l'agrafe 4 de la position intermédiaire, en passant par la position transitoire, à la position enfoncée ou relevée, l'ergot 73 de la languette flexible 32 de la bague 3 peut former une rampe inclinée sensiblement tangentiellement à la paroi interne du connecteur femelle 2. L'ergot 73 venant combler en partie au moins le plateau 72, la rampe de l'ergot 73 peut servir à connecter la première rampe à la deuxième rampe en complétant ou rallongeant l'une des deux rampes, ce qui réduit l'effort nécessaire pour faire passer, depuis la position transitoire, le pied 43 de l'agrafe 4 sur la première ou deuxième rampe.

On notera qu'il est également possible, dans le cas où l'ergot 73 comble entièrement le plateau 72, que la rampe de l'ergot 73 forme une rampe unique pour permettre le passage entre la position connectée et la position enfoncée sans passer par une position transitoire, comme cela est représenté sur la figure 2.

Le système de guidage 7 peut également comprendre un élément de blocage 76 formé sur le connecteur femelle 2 et configuré pour bloquer l'écartement de la branche 42 de l'agrafe 4, lorsque l'agrafe 4 est en position enfoncée. Dans cette configuration, les pieds 43 de l'agrafe 4 se retrouvent en butée contre l'élément de blocage 76 si l'on essaye d'écarter les branches 42 de l'agrafe 4 pour retirer l'embout mâle 5. Cet élément de blocage 76 peut, de façon avantageuse, être disposé en vis-à-vis de la partie basse de la deuxième rampe 75, là où se trouve le pied 43 de l'agrafe 4 lorsque l'agrafe 4 est en position enfoncée, tel que représenté sur les figures 2, 5 et 7.

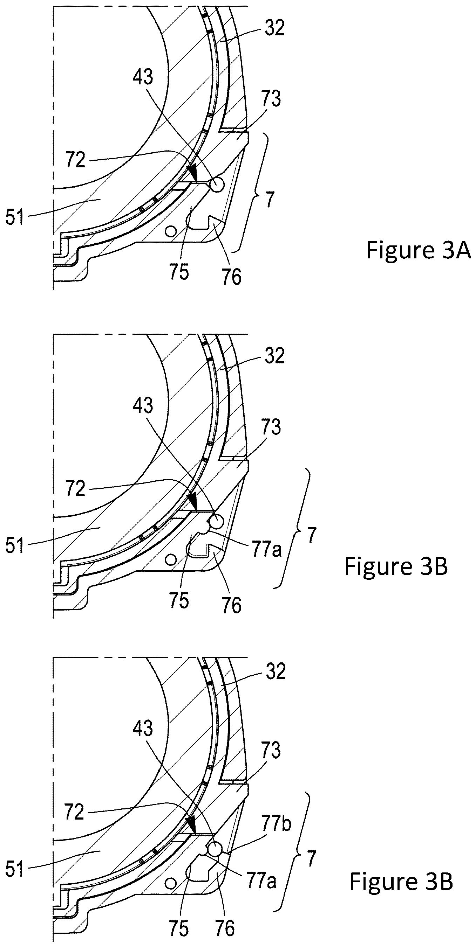

Les figures 3a à 3c représentent des modes de réalisation alternatifs des systèmes de guidage 7 conformes à l'invention montrant d'autres moyens pour positionner l'agrafe 4 en position transitoire.

Sur la figure 3a, la jonction entre le plateau 72 et l'ergot 73 forme un renfoncement en forme de V qui permet au pied 43 de l'agrafe 4 de reposer partiellement sur l'extrémité du plateau 72 lorsque l'agrafe 4 est en position transitoire.

Sur la figure 3b, le pied 43 de l'agrafe 4 sort entièrement du plateau 72 et repose, lorsque l'agrafe 4 est en position transitoire, sur un premier épaulement 77a. Dans ce cas, la position transitoire de l'agrafe 4 se situe entre la position intermédiaire et la position enfoncée, la tête 41 de l'agrafe 4 descendant légèrement pour positionner le pied 43 sur le premier épaulement 77a.

La figure 3c est une variante de la configuration de la figure 3b. Dans ce mode de réalisation, un deuxième épaulement 77b est disposé en vis-à-vis du premier épaulement 77a de sorte que les deux épaulements 77a et 77b soient séparés par un espace sensiblement inférieur à la largeur du pied 43. De manière avantageuse, ce deuxième épaulement 77b est porté par l'élément de blocage 76. Dans cette configuration de position transitoire, il faudra exercer une force de pression supplémentaire pour faire passer le pied 43 à travers l'espace entre les deux épaulements 77a et 77b pour positionner l'agrafe 4 en position enfoncée. La traversée du pied 43 entre les deux épaulements 77a et 77b produit un clic sonore qui permet d'avoir un indicateur supplémentaire du passage de l'agrafe 4 en position enfoncée.

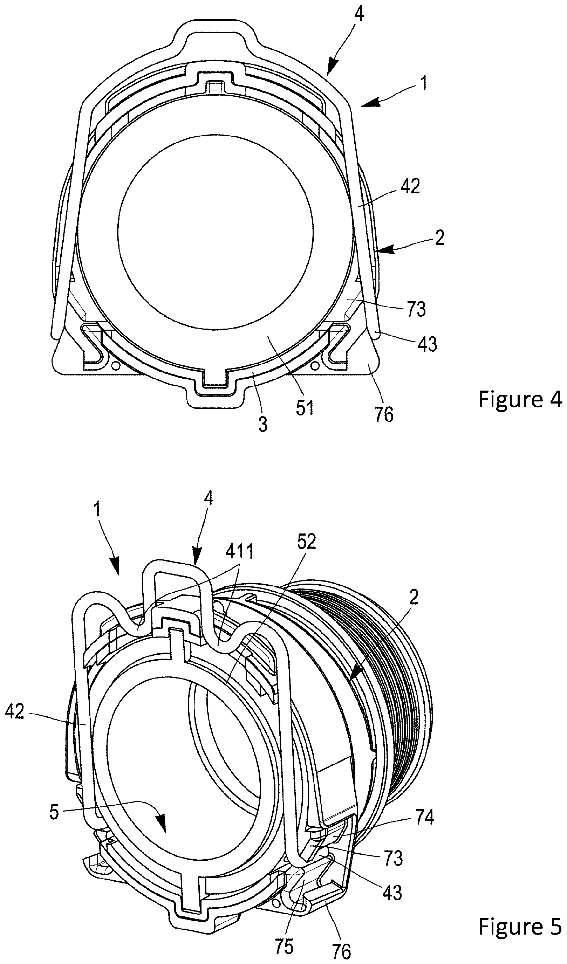

Les figures 4 et 5 représentent deux modes de réalisation alternatifs d'un dispositif de raccord tubulaire 1. Le dispositif 1 est muni de moyens pour empêcher l'agrafe 4 d'être mise en position enfoncée lors de l'insertion de l'embout mâle 5 avant que ce dernier ne soit en position de pré-verrouillage.

Sur la figure 4, la surface extérieure de l'élément de blocage 76 forme une troisième rampe inclinée vers le bas et vers l'extérieur du connecteur femelle 2. Le but est de pouvoir ramener automatiquement l'agrafe en position intermédiaire si l'on arrive à descendre l'agrafe 4 alors que l'embout mâle n'est pas positionné correctement en position de pré-verrouillage. En effet, si l'agrafe 4 vient à descendre alors que l'embout mâle 5 n'est pas en position de verrouillage, le pied 43 de l'agrafe 4 vient en appui sur la surface extérieure de l'élément de blocage 76 et est guidé pour ramener l'agrafe 4 en position intermédiaire lorsque l'on n'exerce plus de pression sur la tête 41 de l'agrafe 4. Le pied 43 de l'agrafe 4 reposant sur la troisième rampe qui force les branches 42 à s'écarter l'une de l'autre, lorsque l'on fait descendre l'agrafe 4, va tendre remonter le long de la troisième rampe quand aucun appui n'est exercé sur la tête de l'agrafe 4, pour permettre aux branches 42 de se rapprocher l'une de l'autre.

Sur la figure 5, la tête 41 de l'agrafe 4 présente au moins une butée 411, coopérant avec des trous aménagés dans le connecteur femelle 2, pour prévenir le positionnement de l'agrafe 4 en position enfoncée lors de l'insertion de l'embout mâle 5, tant qu'il n'occupe pas la position de pré-verrouillage. La butée 411 de la tête 41 vient au contact de l'embout mâle 5 et de son collet tronconique 51 et empêche l'agrafe 4 de descendre en position de verrouillage tant que la butée 411, et donc les branches 42 de l'agrafe 4, ne sont pas alignées avec la rainure 52 de l'embout mâle 5. De manière avantageuse, la tête 41 de l'agrafe 4 peut avoir une forme de W avec les deux pointes du W formant deux butées 411 distinctes.

### Mise en oeuvre du dispositif de raccord tubulaire

Avant l'insertion de l'embout mâle 5, l'agrafe 4 est initialement positionnée en position intermédiaire de livraison. Dans cette position, illustrée sur la figure 1c, les pieds 43 de l'agrafe 4 peuvent légèrement pénétrer vers l'intérieur du dispositif de raccord 1 en poussant hors de l'encoche 71 les ergots 73 des languettes flexibles 32. On rappelle que dans cette position, il est possible d'écarter les branches 42 de l'agrafe 4 l'une de l'autre pour laisser passer le collet tronconique 51 de l'embout mâle 5. De plus, dans cette position, l'agrafe 4 ne peut ni se déplacer en position relevée de déconnexion ni en position enfoncée de verrouillage en l'absence de l'embout mâle 5.

S'il advenait toutefois que l'opérateur positionne l'agrafe 4 en position enfoncée en l'absence de l'embout mâle 5, il serait alors impossible d'insérer l'embout mâle 5 dans le dispositif de raccord 1, l'élément de blocage 76 empêchant l'écartement des branches 42 de l'agrafe 4 pour permettre le passage du collet tronconique 51.

L'agrafe 4 étant en position intermédiaire de livraison, l'embout mâle 5 est introduit à travers le dispositif de raccord 1, comme cela est illustré sur la figure 6. Lors de l'insertion de l'embout mâle 5, le collet tronconique 51 vient, dans un premier temps, en appui sur les branches 42 de l'agrafe 4 et les force à s'écarter l'une de l'autre. Ainsi du fait de l'écartement des branches 42, les pieds 43 de l'agrafe 4 sont poussés au moins partiellement hors du plateau 72 et l'agrafe 4 se trouve en position transitoire. Dans un deuxième temps, le collet tronconique 51 vient en appui sur les languettes flexibles 32 pour que l'ergot 73 puisse occuper l'espace laissé libre par le pied 43 de l'agrafe 4 dans l'encoche 71. Ces deux étapes peuvent se chevaucher en partie, le collet 51 pouvant venir en appui sur les languettes pendant qu'il finit d'écarter les branches 42 de l'agrafe 4.

Lorsque l'embout mâle 5 est en position de pré-verrouillage, les branches 42 de l'agrafe 4 ne peuvent pénétrer que partiellement dans la rainure 52 car les ergots 73 sont maintenus dans l'encoche 71 par l'appui du collet 51 sur les languettes flexibles 32 de sorte à combler au moins partiellement le plateau 72. L'agrafe 4 ne peut alors qu'occuper la position transitoire illustrée sur les figures 3a à 3c. On note que dans cette position, les branches 42 sont en partie dans la rainure 52 et assurent donc une connexion qui n'est toutefois pas sécurisée.

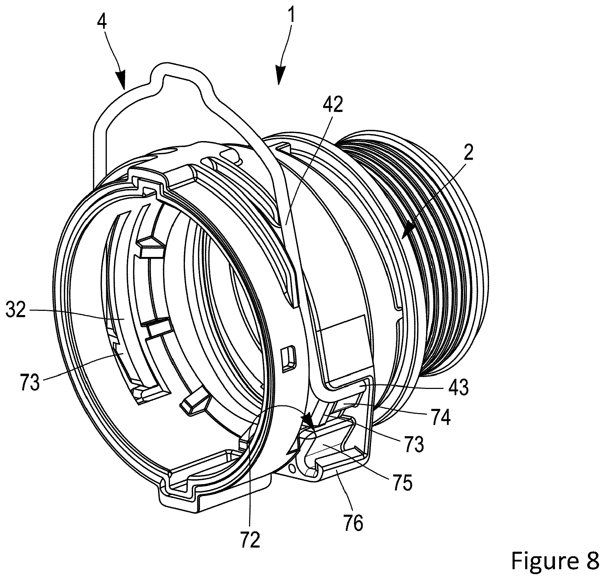

Dans cette position, l'agrafe 4 peut alors passer en position enfoncée telle que représentée sur la figure 7 ou en position relevée telle que représentée sur la figure 8 suivant que l'on exerce, respectivement, une pression ou une traction sur la tête 41 de l'agrafe 4.

On notera qu'il est également possible d'envisager qu'il n'y ait pas de position transitoire. En effet, l'agrafe 4 pourrait passer automatiquement en position enfoncée lorsque l'embout mâle 5 est en position de pré-verrouillage. Cela est notamment le cas quand le pied 43 quitte totalement le plateau 72 et qu'il n'y pas d'épaulements 77a et 77b pour le retenir en position transitoire. Le pied 43 est alors directement alignée avec la deuxième rampe 75 et glisse automatiquement vers la position enfoncée.

En exerçant une pression sur la tête 41 de l'agrafe 4, l'agrafe 4 quitte la position de transition instable et le pied 43 de l'agrafe 4 quitte complètement le plateau 72, et/ou les épaulements 77a et 77b s'ils sont présents, pour suivre la deuxième rampe 75 jusqu'à atteindre la position enfoncée où la tête 41 de l'agrafe 4 est susceptible d'être en butée avec la partie supérieure du connecteur femelle 2. Lors de la descente de l'agrafe 4, les pieds 43 suivent l'inclinaison de la deuxième rampe 75 qui tend à les rapprocher l'un de l'autre pour refermer les branches 43 sur la rainure annulaire 52 de l'embout mâle 5. On rappelle que l'élément de blocage 76 empêche l'écartement des branches 42 de l'agrafe 4 tant que l'agrafe 4 reste en position enfoncée. Ainsi l'embout mâle 5 est correctement verrouillé au connecteur femelle 2 lorsque l'agrafe 4 est en position enfoncée, cette position témoignant visuellement de l'état de bon verrouillage de l'embout mâle 5 dans le dispositif de raccord 1.

En exerçant une traction sur la tête de l'agrafe 4, l'agrafe 4 quitte la position de transition instable et le pied 43 quitte complètement le plateau 72, et/ou les épaulements 77a et 77b, guidé par la première rampe 74 jusqu'à atteindre la position relevée où la tête 41 de l'agrafe 4 se trouve le plus éloigné de la partie supérieure du connecteur femelle 2. Lors de la montée de l'agrafe 4, les pieds 43 suivent l'inclinaison de la première rampe 74 qui tend à les écarter l'un de l'autre. Les branches 42 sont donc écartées de sorte qu'elles ne débouchent plus à l'intérieur du volume interne du dispositif de raccord 1 et ne font plus obstacle au passage du collet 51. Cette position relevée de l'agrafe 4 correspond aussi à la position de démontage (ou déconnexion) du dispositif de raccord 1.

On notera que tant que l'embout mâle 5 reste en position de pré-verrouillage, il est possible de déplacer facilement l'agrafe 4 de la position enfoncée à la position relevée et vice-versa, l'ergot 73 venant remplacer et/ou compléter la première 74 et le deuxième 75 rampe.

Ainsi, ce dispositif de raccord 1 permet d'obtenir une connexion sécurisée d'un embout mâle 5 dans un connecteur femelle 2 en deux étapes, la première étape étant l'insertion de l'embout mâle 5 et la deuxième étape étant l'abaissement de l'agrafe 4 en position enfoncée de verrouillage. Les deux étapes ne peuvent être réalisées que dans cet ordre précis. En effet, si la deuxième étape est réalisée avant la première étape il ne sera pas possible de réaliser la première étape car les branches 42 de l'agrafe 4 ne peuvent pas s'écarter lorsque l'agrafe 4 est en position enfoncée. On remarquera de plus que la première étape seule peut déjà permettre de retenir l'embout mâle 5 dans le connecteur femelle 2 sans toutefois constituer une connexion sécurisée. En effet en position transitoire, les branches 42 de l'agrafe 4, dont les pieds 43 sont encore au moins partiellement sur le plateau 72, peuvent pénétrer en partie dans la rainure annulaire 52 et bloquer l'embout mâle 5 mais rien n'empêche toutefois d'écarter les branches 42 pour les sortir de la rainure 52 et libérer l'embout mâle 5 dans cette position transitoire.

Bien entendu l'invention n'est pas limitée aux modes de mise en oeuvre décrits et on peut y apporter des variantes de réalisation sans sortir du cadre de l'invention tel que défini par les revendications.

Dans la description détaillée, on a considéré que la languette flexible 32 et le système de guidage 7 se situaient en aval des ouvertures 31 et fentes 21 latérales par rapport au sens d'insertion de l'embout mâle 5. On a également considéré que la forme en L des pieds 43 de l'agrafe 4 était orientée dans ce sens d'insertion. Bien évidemment, il est tout à fait possible de modifier cette disposition pour l'adapter au cas où la languette 32 se trouverait en amont de l'ouverture latérale 31. Il suffit pour cela de disposer le système de guidage 7 en amont de la fente latérale 21 et de disposer l'agrafe 4 de sorte que la forme en L des pieds 43 soit orientée dans le sens de retrait de l'embout mâle 5.

Dans ce cas, ce sont les languettes 32 qui écartent les branches 42 à la place du collet 51. En effet, le collet 51 rencontre et écarte en premier les languettes flexibles 32 qui, par le biais du contact des ergots 73 avec les pieds 43 de l'agrafe 4, vont forcer les branches 42 à s'écarter. tout à fait possible de modifier cette disposition pour l'adapter au cas où la languette 32 se trouverait en amont de l'ouverture latérale 31. Il suffit pour cela de disposer le système de guidage 7 en amont de la fente latérale 21 et de disposer l'agrafe 4 de sorte que la forme en L des pieds 43 soit orientée dans le sens de retrait de l'embout mâle 5.

Dans ce cas, ce sont les languettes 32 qui écartent les branches 42 à la place du collet 51. En effet, le collet 51 rencontre et écarte en premier les languettes flexibles 32 qui, par le biais du contact des ergots 73 avec les pieds 43 de l'agrafe 4, vont forcer les branches 42 à s'écarter.

## Revendications

1. Dispositif de raccord tubulaire (1) comprenant :
• Un connecteur femelle (2), dans lequel un embout mâle (5) muni d'une rainure annulaire (52) est destiné à être inséré, le connecteur femelle (2) étant pourvu de deux fentes latérales (21) symétriques par rapport à un axe radial (A)
• Une agrafe (4) de verrouillage en forme de U comportant une tête (41) et deux branches (42), et chevauchant le connecteur femelle (2), chaque branche (42) s'étendant dans une fente latérale (21) et se terminant par un pied (43);
• Deux systèmes de guidage (7) latéraux symétriques par rapport à l'axe radial (A), coopérant avec les pieds (43) de l'agrafe (4) pour maintenir celle-ci dans une position relevée de déconnexion de l'embout mâle (5) ou dans une position enfoncée de verrouillage de l'embout mâle (5) dans le connecteur femelle (2), chaque système de guidage (7) comprenant :
o une encoche (71), formée dans le connecteur femelle (2) attenante à la fente latérale (21);
o un plateau (72) délimitant un bord inférieur de l'encoche (71) et sur lequel le pied (43) repose pour maintenir l'agrafe dans une position intermédiaire, entre la position relevée et la position enfoncée, en l'absence d'embout mâle (5) ;
• Une bague (3) disposée contre une paroi interne du connecteur femelle (3) ;
le dispositif (1) étant **caractérisé en ce que** chaque système de guidage (7) comprend en outre un ergot (73) disposé sur une languette flexible (32) portée par la bague (3), et destiné à combler au moins en partie l'encoche (71) et le plateau (72) lorsque l'embout mâle (5) est inséré dans le connecteur (2), sa rainure annulaire (52) étant destinée à être en vis-à-vis des fentes latérales (21), pour permettre à l'agrafe (4) de passer dans une position enfoncée ou dans une position relevée.

2. Dispositif de raccord tubulaire (1) selon la revendication précédente, dans lequel chaque système de guidage (7) comprend une première rampe (74) pour guider le pied (43) entre les positions relevée et intermédiaire de l'agrafe (4), et une deuxième rampe (75) pour guider le pied (43) entre les positions intermédiaire et enfoncée, la première rampe (74) et la deuxième rampe (75) étant formées sur le connecteur femelle (2).

3. Dispositif de raccord tubulaire (1) selon la revendication précédente, dans lequel la première rampe (74) et la deuxième rampe (75) sont inclinées sensiblement tangentiellement à la paroi interne du connecteur femelle (2) et séparées entre elles par l'encoche (71).

4. Dispositif de raccord tubulaire selon l'une des revendications 2 à 3, dans lequel la première rampe (74) est délimitée en partie basse par l'encoche (71) et en partie haute par un rebord formant une butée pour le pied (43) de l'agrafe (4).

5. Dispositif de raccord tubulaire (1) selon la revendication précédente, dans lequel la première rampe(74) comprend un creux à proximité du rebord formant une zone de retenue pour le pied (43), de manière à retenir l'agrafe (4) en position relevée.

6. Dispositif de raccord tubulaire (1) selon l'une des revendications 2 à 5, dans lequel la deuxième rampe (75) est délimitée en partie haute par le plateau (72) et en partie basse par un palier sur lequel le pied de l'agrafe (43) se positionne lorsque l'agrafe (4) est en position enfoncée.

7. Dispositif de raccord tubulaire (1) selon l'une des revendications précédentes, dans lequel l'ergot (73) comble en partie le plateau (72) lorsque l'embout mâle (5) est inséré, sa rainure annulaire (52) étant en vis-à-vis des fentes latérales (21), le pied (43) de l'agrafe (4) reposant sur un bord non comblé du plateau (72), plaçant l'agrafe (4) dans une position transitoire, entre la position intermédiaire et la position enfoncée.

8. Dispositif de raccord tubulaire (1) selon l'une des revendications 2 à 7, dans lequel la deuxième rampe (75) comporte un premier épaulement (77a) sur lequel le pied (43) de l'agrafe (4) est susceptible de reposer pour placer l'agrafe (4) dans une position transitoire, entre la position intermédiaire et la position enfoncée.

9. Dispositif de raccord tubulaire (1) selon l'une des revendications précédentes, dans lequel chaque système de guidage (7) comprend un élément de blocage (76) formé sur le connecteur femelle (2) et configuré pour bloquer l'écartement de la branche (42) de l'agrafe (4), lorsque l'agrafe (4) est en position enfoncée.

10. Dispositif de raccord tubulaire (1) selon les revendications 8 et 9, dans lequel l'élément de blocage (76) comporte un deuxième épaulement (77b) en vis-à-vis du premier épaulement (77a), les deux épaulements étant séparés par un espace sensiblement inférieur à une largeur du pied (43).

11. Dispositif de raccord tubulaire (1) selon l'une des revendications 9 à 10, dans lequel la surface extérieure de l'élément de blocage (76) forme une troisième rampe inclinée vers le bas et vers l'extérieur du connecteur femelle (2).

12. Dispositif de raccord tubulaire (1) selon l'une des revendications précédentes, dans lequel l'ergot (73) de la languette flexible (32) forme une rampe inclinée sensiblement tangentiellement à la paroi interne du connecteur femelle (2).

13. Dispositif de raccord tubulaire (1) selon l'une des revendications précédentes, dans lequel la languette flexible (32) est formée par une portion attenante à une ouverture latérale (31) de la bague (3), laquelle ouverture latérale se trouve en vis-à-vis d'une fente latérale.

14. Dispositif de raccord tubulaire (1) selon l'une des revendications précédentes, dans lequel la tête de l'agrafe (41) présente au moins une butée (411) coopérant avec des trous aménagés dans le connecteur femelle (2), pour prévenir le positionnement de l'agrafe (4) en position enfoncée lors de l'insertion de l'embout mâle (5) tant que sa rainure annulaire (52) n'est pas en vis-à-vis des fentes latérales (21) .

15. Dispositif de raccord tubulaire (1) selon l'une des revendications précédentes, dans lequel l'encoche (71) est formée par un élargissement de la fente latérale (21).

## Patentansprüche

1. Rohrförmige Verbindungsvorrichtung (1), umfassend:
• einen weiblichen Verbinder (2), in den eine mit einer ringförmigen Nut (52) versehene Einsteckmuffe (5) eingeführt werden soll, wobei der weibliche Verbinder (2) mit zwei Seitenschlitzen (21) versehen ist, die symmetrisch zu einer radialen Achse (A) sind,
• eine U-förmige Verriegelungsklammer (4), die einen Kopf (41) und zwei Schenkel (42) aufweist und den weiblichen Verbinder (2) überlappt, wobei jeder Schenkel (42) sich in einen Seitenschlitz (21) erstreckt und in einem Fuß (43) endet;
• zwei Seitenführungssysteme (7), die zu der radialen Achse (A) symmetrisch sind und mit den Füßen (43) der Klammer (4) zusammenwirken, um diese in einer angehobenen Position zum Trennen der Einsteckmuffe (5) oder in einer eingesteckten Position zum Verriegeln der Einsteckmuffe (5) in dem weiblichen Verbinder (2) zu halten, jedes Führungssystem (7) umfassend:
o eine Kerbe (71), die in dem weiblichen Verbinder (2) ausgebildet ist und an den Seitenschlitz (21) angrenzt;
o eine Platte (72), die einen unteren Rand der Kerbe (71) begrenzt und auf der der Fuß (43) ruht, um die Klammer in einer Zwischenposition zwischen der angehobenen und der eingesteckten Position zu halten, wenn keine Einsteckmuffe (5) vorhanden ist;
• einen Ring (3), der gegen eine Innenwand des weiblichen Verbinders (3) angeordnet ist; wobei die Vorrichtung (1) **dadurch gekennzeichnet ist, dass** jedes Führungssystem (7) ferner einen Vorsprung (73) umfasst, der auf einer flexiblen Zunge (32) angeordnet ist, die durch den Ring (3) getragen wird, und dazu bestimmt ist, die Kerbe (71) und die Platte (72) mindestens teilweise auszufüllen, wenn die Einsteckmuffe (5) in den Verbinder (2) eingeführt wird, wobei ihre ringförmige Nut (52) dazu bestimmt ist, den Seitenschlitzen (21) gegenüber zu liegen, um es der Klammer (4) zu ermöglichen, in eine eingesteckte oder in eine angehobene Position zu gelangen.

2. Rohrförmige Verbindungsvorrichtung (1) nach dem vorstehenden Anspruch, wobei jedes Führungssystem (7) eine erste Rampe (74) zum Führen des Fußes (43) zwischen der angehobenen und der Zwischenposition der Klammer (4) und eine zweite Rampe (75) zum Führen des Fußes (43) zwischen der Zwischen- und der eingesteckten Position umfasst, wobei die erste Rampe (74) und die zweite Rampe (75) an dem weiblichen Verbinder (2) ausgebildet sind.

3. Rohrförmige Verbindungsvorrichtung (1) nach dem vorstehenden Anspruch, wobei die erste Rampe (74) und die zweite Rampe (75) im Wesentlichen tangential zu der Innenwand des weiblichen Verbinders (2) geneigt sind und durch die Kerbe (71) voneinander getrennt sind.

4. Rohrförmige Verbindungsvorrichtung nach einem der Ansprüche 2 bis 3, wobei die erste Rampe (74) in dem unteren Teil durch die Kerbe (71) und in dem oberen Teil durch einen Rand begrenzt ist, der einen Anschlag für den Fuß (43) der Klammer (4) ausbildet.

5. Rohrförmige Verbindungsvorrichtung (1) nach dem vorstehenden Anspruch, wobei die erste Rampe (74) eine Aussparung in der Nähe des Randes, die einen Haltebereich für den Fuß (43) ausbildet, sodass die Klammer (4) in der angehobenen Position gehalten wird, umfasst.

6. Rohrförmige Verbindungsvorrichtung (1) nach einem der Ansprüche 2 bis 5, wobei die zweite Rampe (75) in dem oberen Teil durch die Platte (72) und in dem unteren Teil durch ein Lager begrenzt ist, an dem der Fuß der Klammer (43) sich positioniert, wenn die Klammer (4) sich in der eingesteckten Position befindet.

7. Rohrförmige Verbindungsvorrichtung (1) nach einem der vorstehenden Ansprüche, wobei der Stift (73) die Platte (72) teilweise ausfüllt, wenn die Einsteckmuffe (5) eingeführt ist, wobei ihre ringförmige Nut (52) den Seitenschlitzen (21) gegenüberliegt, der Fuß (43) der Klammer (4) auf einem nicht ausgefüllten Rand der Platte (72) ruht, wobei die Klammer (4) in eine Übergangsposition zwischen der Zwischenposition und der eingesteckten Position gebracht wird.

8. Rohrförmige Verbindungsvorrichtung (1) nach einem der Ansprüche 2 bis 7, wobei die zweite Rampe (75) eine erste Schulter (77a) aufweist, auf der der Fuß (43) der Klammer (4) ruhen kann, um die Klammer (4) in eine Übergangsposition zwischen der Zwischenposition und der eingesteckten Position zu bringen.

9. Rohrförmige Verbindungsvorrichtung (1) nach einem der vorstehenden Ansprüche, wobei jedes Führungssystem (7) ein Blockierelement (76) umfasst, das an dem weiblichen Verbinder (2) ausgebildet ist und konfiguriert ist, um die Spreizung des Schenkels (42) der Klammer (4) zu blockieren, wenn die Klammer (4) sich in der eingesteckten Position befindet.

10. Rohrförmige Verbindungsvorrichtung (1) nach den Ansprüchen 8 und 9, wobei das Blockierelement (76) eine zweite Schulter (77b) gegenüber der ersten Schulter (77a) aufweist, wobei die zwei Schultern durch einen Abstand, der im Wesentlichen kleiner als eine Breite des Fußes (43) ist, getrennt sind.

11. Rohrförmige Verbindungsvorrichtung (1) nach einem der Ansprüche 9 bis 10, wobei die Außenoberfläche des Blockierelements (76) eine dritte Rampe ausbildet, die nach unten und zu der Außenseite des weiblichen Verbinders (2) geneigt ist.

12. Rohrförmige Verbindungsvorrichtung (1) nach einem der vorstehenden Ansprüche, wobei der Stift (73) der flexiblen Zunge (32) eine Rampe ausbildet, die im Wesentlichen tangential zu der Innenwand des weiblichen Verbinders (2) geneigt ist.

13. Rohrförmige Verbindungsvorrichtung (1) nach einem der vorstehenden Ansprüche, wobei die flexible Zunge (32) durch einen Abschnitt ausgebildet wird, der an eine Seitenöffnung (31) des Rings (3) angrenzt, wobei die seitliche Öffnung sich gegenüber einem Seitenschlitz befindet.

14. Rohrförmige Verbindungsvorrichtung (1) nach einem der vorstehenden Ansprüche, wobei der Kopf der Klammer (41) mindestens einen Anschlag (411) aufweist, der mit in dem weiblichen Verbinder (2) eingerichteten Löchern zusammenwirkt, um die Positionierung der Klammer (4) in der eingesteckten Position, wenn die Einsteckmuffe (5) eingeführt wird, zu verhindern, solange ihre ringförmige Nut (52) den Seitenschlitzen (21) nicht gegenüberliegt.

15. Rohrförmige Verbindungsvorrichtung (1) nach einem der vorstehenden Ansprüche, wobei die Kerbe (71) durch eine Erweiterung des Seitenschlitzes (21) ausgebildet wird.

## Claims

1. Tubular connection device (1) comprising:
• a female connector (2), into which a male end piece (5) provided with an annular groove (52) is intended to be inserted, the female connector (2) being provided with two lateral slits (21) which are symmetrical with respect to a radial axis (A);
• a U-shaped locking clip (4), which comprises a head (41) and two branches (42) and straddles the female connector (2), each branch (42) extending into a lateral slit (21) and ending with a foot (43);
• two lateral guide systems (7), which are symmetrical with respect to the radial axis (A) and cooperate with the feet (43) of the clip (4) in order to keep it in a raised position of disconnection from the male end piece (5) or in a pressed-in position for locking the male end piece (5) in the female connector (2), each guide system (7) comprising:
o a notch (71), which is formed in the female connector (2) adjacent to the lateral slit (21);
o a plate (72), which delimits a lower edge of the notch (71) and on which the foot (43) rests in order to keep the clip in an intermediate position between the raised position and the pressed-in position in the absence of a male end piece (5);
• a ring (3), which is arranged against an inner wall of the female connector (3); the device (1) being **characterized in that** each guide system (7) further comprises a lug (73), which is arranged on a flexible tab (32) carried by the ring (3) and is intended to at least partly fill the notch (71) and the plate (72) when the male end piece (5) is inserted into the connector (2), its annular groove (52) being intended to be opposite the lateral slits (21) to allow the clip (4) to pass into a pressed-in position or into a raised position.

2. Tubular connection device (1) according to the preceding claim, wherein each guide system (7) comprises a first ramp (74) for guiding the foot (43) between the raised and intermediate positions of the clip (4), and a second ramp (75) for guiding the foot (43) between the intermediate and pressed-in positions, the first ramp (74) and the second ramp (75) being formed on the female connector (2).

3. Tubular connection device (1) according to the preceding claim, wherein the first ramp (74) and the second ramp (75) are inclined substantially tangentially to the internal wall of the female connector (2) and separated from one another by the notch (71).

4. Tubular connection device according to either claim 2 or claim 3, wherein the first ramp (74) is delimited in the lower part by the notch (71) and in the upper part by a flange forming a stop for the foot (43) of the clip (4).

5. Tubular connection device (1) according to the preceding claim, wherein the first ramp (74) comprises a hollow near the flange, which forms a retaining region for the foot (43) so as to keep the clip (4) in the raised position.

6. Tubular connection device (1) according to any of claims 2 to 5, wherein the second ramp (75) is delimited in the upper part by the plate (72) and in the lower part by a bearing on which the foot of the clip (43) is positioned when the clip (4) is in the pressed-in position.

7. Tubular connection device (1) according to any of the preceding claims, wherein the lug (73) partly fills the plate (72) when the male end piece (5) is inserted, its annular groove (52) being opposite the lateral slits (21), the foot (43) of the clip (4) resting on an unfilled edge of the plate (72), placing the clip (4) in a transitional position between the intermediate position and the pressed-in position.

8. Tubular connection device (1) according to any of claims 2 to 7, wherein the second ramp (75) comprises a first shoulder (77a) on which the foot (43) of the clip (4) is able to rest in order to place the clip (4) in a transitional position between the intermediate position and the pressed-in position.

9. Tubular connection device (1) according to any of the preceding claims, wherein each guide system (7) comprises a blocking element (76) which is formed on the female connector (2) and is configured to block the separation of the branch (42) of the clip (4) when the clip (4) is in the pressed-in position.

10. Tubular connection device (1) according to either claim 8 or claim 9, wherein the blocking element (76) comprises a second shoulder (77b) opposite the first shoulder (77a), the two shoulders being separated by a space which is substantially less than a width of the foot (43).

11. Tubular connection device (1) according to either claim 9 or claim 10, wherein the outer surface of the blocking element (76) forms a third ramp which is inclined toward the bottom and the outside of the female connector (2).

12. Tubular connection device (1) according to any of the preceding claims, wherein the lug (73) of the flexible tab (32) forms a ramp which is inclined substantially tangentially to the internal wall of the female connector (2).

13. Tubular connection device (1) according to any of the preceding claims, wherein the flexible tab (32) is formed by a portion adjacent to a lateral opening (31) of the ring (3), which lateral opening is opposite a lateral slit.

14. Tubular connection device (1) according to any of the preceding claims, wherein the head of the clip (41) has at least one stop (411) which cooperates with holes made in the female connector (2) to prevent the positioning of the clip (4) in the pressed-in position during the insertion of the male end piece (5) as long as its annular groove (52) is not opposite the lateral slits (21).

15. Tubular connection device (1) according to any of the preceding claims, wherein the notch (71) is formed by an enlargement of the lateral slit (21).
